# EUROPÄISCHE PATENTSCHRIFT

(11) **EP 0 798 591 B1**
(45) Veröffentlichungstag und Bekanntmachung des Hinweises auf die Patenterteilung: **26.05.2004**
(21) Anmeldenummer: 97200845.2
(22) Anmeldetag: 21.03.1997
(51) Int. Cl.: G03B 1/44, H04N 3/38

(54) **Filmabtaster zur fernsehmässigen Abtastung eines Films mit Führungselementen des Films**
Filmscanner for television scanning of a film with film guiding elements
Analyseur de film pour télévision avec des éléments de guidage du film

(30) Priorität: 30.03.1996 DE 19612880
(43) Veröffentlichungstag der Anmeldung: 01.10.1997
(73) Patentinhaber: BTS Holding International B.V., 4827 HG Breda (NL)
(72) Erfinder: Eiberger, Berthold, Dr.-Ing., 22335 Hamburg (DE); Wulf, Rudolf, 22335 Hamburg (DE)
(74) Vertreter: Rossmanith, Manfred, Dr.

(56) Entgegenhaltungen:
- EP-A- 0 542 551
- AT-A- 344 505
- CH-A- 436 969
- DE-A- 2 633 133
- US-A- 5 266 979

## Beschreibung

Bei der fernsehmäßigen Filmabtastung in einem sogenannten Filmabtaster wird der Film zwischen einer Lichtquelle und einem optoelektronischen Sensor, welcher beispielsweise aus CCD-Zeilensensoren besteht, transportiert. Längs seiner Transportrichtung wird der Film in der Schärfenebene, also im Bereich des Strahlengangs, auf einer gekrümmten Bahn geführt. Zu diesem Zweck sind im Bereich des Filmfensters gekrümmte Kufen vorgesehen, auf denen der Film außerhalb der Filmbilder aufliegt und gleitet (siehe z.B. DE-Patentanmeldung 195 40 005.4). Quer zur Transportrichtung gleitet der Film in der Schärfenebene punktuell mit einer seiner Längskanten auf einem Führungselement, welches üblicherweise aus einem abriebfesten Keramikmaterial besteht. Damit sichergestellt ist, dass der Film mit der Längskante auf dem Führungselement aufliegt, drückt auf die andere Längskante des Films eine federnd gelagerte Rolle oder Kufe.

Aus der US 5 266 979 A ist eine Filmführung für einen Filmabtaster bekannt, die Führungskufen aufweist, zwischen denen der Film quer zur Filmtransportrichtung geführt ist. Eine der beiden Führungskufen ist mittels Federn gegen eine der beiden Filmlängskanten gedrückt.

In der EP 0 542 551 A ist eine weitere Vorrichtung zur Filmführung beschrieben, bei welcher der Film von einer Andruckrolle gegen eine Führungskufe gedrückt ist.

Die CH 436 969 schlägt einen Schmalfilmprojektor vor, bei dem der Film zwischen einer federnd gelagerten Filmführungsplatte und verschwenkbaren Anpressplatten geführt ist. Es handelt sich hierbei um eine Gleitführung.

In der AT 344 505 ist ein Filmprojektor offenbart, bei dem der Film auf einer Seite durch ein in Kufenform gebogenes Federblech gegen eine Anlage gedrückt ist, um die Führung des Filmes sicherzustellen.

In der DE 26 33 133 A ist ein Filmprojektor beschrieben, bei dem der Film ebenfalls durch federbelastete Kufen geführt ist.

Ein wesentlicher Nachteil der Wiedergabequalität von Filmen im Fernsehen gegenüber Aufnahmen mit elektronischen Kameras sind sichtbare horizontale und vertikale Bildstandsfehler. Ursache dieser Fehler können u.a. Toleranzen im Filmmaterial selbst sein.

Der vorliegenden Erfindung, welche im Anspruch 1 definiert ist, liegt die Aufgabe zugrunde, einen Filmabtaster bzw. eine Vorrichtung zur fernsehmäßigen Abtastung eines Films so auszugestalten, daß eine Reduzierung der horizontalen Bildstandsfehler erreicht wird.

Diese Aufgabe wird erfindungsgemäß dadurch gelöst, dass das zweite Führungselement zwei drehbar gelagerte auf einer Wippe angeordnete Rollen umfasst, die mit der zweiten Längskante des Films in Berührung sind.

Nach einer Weiterbildung der Erfindung ist die Lage dieses Führungselementes dreidimensional einstellbar. Weiterhin kann es vorgesehen sein, das erste Führungselement konkav auszubilden. Die Erfindung weist den Vorteil auf, daß mittels einer im Bereich des Strahlenganges des Films angeordneten Mehrpunktführung horizontale Bildstandsfehler durch Ausmittelung von Unregelmäßigkeiten an Kanten des Filmmaterials wesentlich reduziert werden können.

Die Erfindung soll nunmehr anhand eines in der Zeichnung dargestellten Ausführungsbeispiels näher erläutert werden. Es zeigen:
- Fig. 1: eine den Bereich des Filmfensters darstellende Anordnung zur fernsehmäßigen Abtastung von Filmen,
- Fig. 2: eine erfindungsgemäße Vorrichtung zur Führung des Films.

In beiden Figuren vorkommende gleiche Teile sind mit gleichen Bezugszeichen versehen.

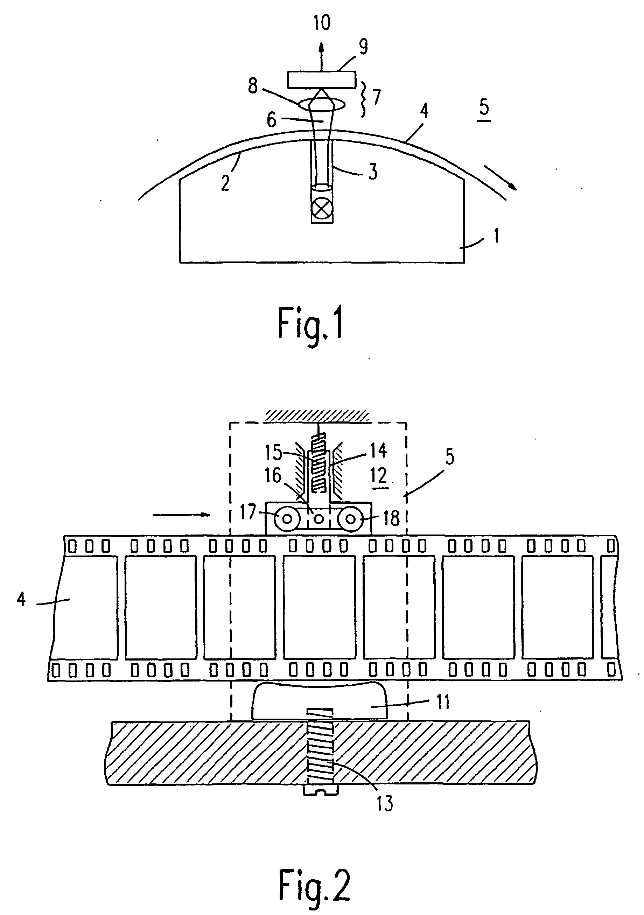

Fig. 1 zeigt als Prinzipdarstellung ein an sich bekanntes Filmfenster 5, welches im wesentlichen aus einer Filmführungseinrichtung 1 mit gekrümmter Filmführungsfläche 2 und einer Beleuchtungseinheit 3 besteht. Ein Film 4 wird hierbei in Pfeilrichtung über die gekrümmte Filmführungsfläche 2 transportiert und mittels eines von der Beleuchtungseinheit 3 erzeugten Lichtstrahles 6 durchleuchtet. Auf der der Beleuchtungseinheit 3 gegenüberliegenden Seite des Films 4 ist eine Bildaufnahmeeinrichtung 7 vorgesehen, welche aus einer Optik 8 und einem optoelektronischen Sensor 9 besteht. Der durch den Filminhalt modulierte Lichtstrahl 6 wird dabei über die Optik 8 auf den lichtempfindlichen Bereich des Sensors 9 abgebildet, welcher diese optische Information in ein am Ausgang 10 abnehmbares elektrisches Bildsignal wandelt.

In Fig. 2 ist die erfindungsgemäße Vorrichtung zur Filmführung, bestehend aus der in Fig. 1 gezeigten Filmführungseinheit 1 mit gekrümmter Filmführungsfläche 2, dargestellt, wobei der Film 4 in Pfeilrichtung durch das Filmfenster 5 transportiert wird. Zu beiden Seiten des Films 4 im Bereich des Filmfensters 5 bzw. des Strahlenganges 6 sind Führungselemente 11 und 12 gemäß der Erfindung vorgesehen. Hierbei ist an der einen Längskante des Films 4 ein in Richtung der Filmkante konkav geformtes ersten Führungselement 11 aus Keramikmaterial angeordnet, an dessen beiden Vorsprüngen die Filmkante anliegt bzw. gleitet. Das erste Filmführungselement 11 ist mittels einer Schraubenbefestigung 13 dreidimensional einstellbar.

An der anderen Längskante ist diametral gegenüberliegend ein zweites Führungselement 12 - zentrisch zum ersten Führungselement 11 beabstandet - angeordnet, welches auf diese andere Längskante drückt. Dieses zweite Führungselement 12 besteht aus einem zylinderförmigen Teil 14 mit einer in Richtung der anderen Filmkante wirkenden Druckfeder 15, wobei am filmseitigen Ende des zylinderförmigen Teils 14 eine Wippe 16 schwenkbar gelagert ist, an deren Enden je eine Rolle 17 und 18 drehbar befestigt ist. Diese Rollen 17, 18 drücken mittels der Federkraft auf die Filmkante, wodurch der Film an die beiden Berührungspunkte des ersten Führungselementes 11 gedrückt wird. Unregelmäßigkeiten der Filmkanten, welche zu horizontalen Bildstandsfehlern führen können, werden somit ausgemittelt.

## Patentansprüche

1. Filmabtaster zur fernsehmäßigen Abtastung eines Films, bei welchem der Film im Strahlengang zwischen einer Lichtquelle (3) und einem optoelektronischen Sensor (9) transportiert und dabei quer zur Filmtransportrichtung geführt wird, wobei
im Bereich des Strahlengangs (6) ein erstes Führungselement (11) vorgesehen ist, welches eine erste Längskante des Films (4) an mindestens zwei Punkten in einem Bereich des Films abstützt, wo dieser den Strahlengang kreuzt, wobei
ein federnd gelagertes zweites Führungselement (12) gegen die zweite Längskante des Films drückt, **dadurch gekennzeichnet, dass** das zweite Führungselement (12) zwei drehbar gelagerte auf den beiden Enden einer Wippe (16) angeordnete Rollen (17, 18) umfasst, die mit der zweiten Längskante des Films (4) in Berührung sind, so dass Unregelmässigkeiten der Filmkanten ausgemittelt werden.

2. Filmabtaster nach Anspruch 1, **dadurch gekennzeichnet, dass** die Lage des ersten Führüngselementes (11) dreidimensional einstellbar ist.

3. Filmabtaster nach Anspruch 1, **dadurch gekennzeichnet, dass** das erste Führungselement (11) konkav ausgebildet ist.

## Revendications

1. Télécinéma dans lequel le film est transporté dans le trajet du rayon entre une source de lumière (3) et un capteur optoélectronique (9) en étant guidé transversalement au sens de transport du film où
- dans la zone du trajet du rayon (6), un premier élément de guidage (11) est prévu, lequel supporte en au moins deux points une première arête longitudinale du film (4) dans une zone du film où il croise le trajet du rayon
où
- un deuxième élément de guidage (12) porté par un ressort appuie contre la deuxième arête longitudinale du film, **caractérisé en ce que** le deuxième élément de guidage (12) comporte deux rouleaux (17, 18) orientables placés sur les deux extrémités d'un support à bascule (16) qui sont en contact avec la deuxième arête longitudinale du film (4) de sorte que les irrégularités de l'arête du film puissent être égalisées.

2. Télécinéma selon la revendication 1, **caractérisé en ce que** la position du premier élément de guidage (11) peut être réglée de manière tridimensionnelle.

3. Télécinéma selon la revendication 1, **caractérisé en ce que** le premier élément de guidage (11) présente une conception concave.

## Claims

1. Film scanner in which the film is transported in the radiation path between a light source (3) and an optoelectronic sensor (9) and is guided transversely to the film transport direction, wherein in the region of the radiation path (6) a first guiding element (11) is provided supporting a first longitudinal side of the film (4) at at least two points within a region of the film, and where said film crosses the radiation path and wherein a second spring-supported guiding element (12) is pressed against the second longitudinal side of the film,
**characterized in that** the second guiding element (12) consists of two rolls (17, 18) positioned rotably and arranged at the two ends of a rocker (16) which rolls are in contact with the second longitudinal side of the film (4) so that irregularities of the film sides are averaged out.

2. Film scanner according to claim 1, **characterized in that** the position of the first guiding element (11) is three-dimensionally adjustable.

3. Film scanner according to claim 1, **characterized in that** the first guiding element (11) is configured concavely.
